# EUROPEAN PATENT APPLICATION

(11) **EP 2 792 481 A1**
(43) Date of publication of application: **22.10.2014**
(21) Application number: 13164045.0
(22) Date of filing: 17.04.2013
(51) Int. Cl.: B32B 7/12, B32B 15/08, B32B 27/08, B32B 27/18, B32B 29/00, B32B 27/10, C09J 7/00, B65D 81/00, B65D 65/00

(54) **Multilayer assembly**

(71) Applicant: Goglio S.p.A., 20144 Milano (IT)
(72) Inventor: Bosetti, Osvaldo, 21100 Varese VA (IT); Fedeli, Mauro, 21049 Tradate VA (IT); Nerin de la Puerta, M.C. Cristina, 50008 Zaragoza ES (ES); Carrizo, Daniel, 50018 Zaragoza ES (ES)
(74) Representative: Pontiroli, Alessandro

(57) **Abstract**

The present invention relates to a multilayer assembly comprising an antioxidant substance, to a container comprising said assembly, its use and a method for its production.

## Description

### FIELD OF THE INVENTION

The present invention relates to a multilayer assembly, suitable for packaging, comprising an antioxidant substance, to a container comprising said assembly, to its use and a method for its production.

### BACKGROUND OF THE INVENTION

Packaging and storage of air-sensitive materials require special measures to avoid oxidation-related degradation and loss of the initial properties. In particular, upon exposure to oxygen, foodstuffs containing unsaturated fatty acids tend to grow rancid over time and valuable nutriments such as coffee and spices may lose their aromas and flavours on storage.

Thus, in addition to being an efficient barrier against light and moisture, the packaging materials must also be able to avoid the intake of external oxygen. However, the packaging materials known in the art are not effectively protective against the residual air, which may become trapped within the package at the moment of sealing. Removal of the residual air is advantageous to avoid oxidation of the package content over prolonged time. Mainly, removal of atmospheric oxygen from the container prior to sealing is effected either by application of vacuum or by flushing the package and its content with an inert gas, such as nitrogen or carbon dioxide.

Each of these two methods has the disadvantage that fragrances, aromas and other volatile compounds are removed from the goods in the container, to the detriment of their organoleptic properties. Moreover, application of vacuum or flushing with an inert gas require additional steps and equipment, with an overall increase in cost and duration of the packaging process. In addition, neither of these methods is capable of removing completely the residual oxygen, that may be trapped within fissures and pores of the contained materials.

### SUMMARY OF THE INVENTION

The object of the present invention is to provide a packaging material, which can reduce significantly or eliminate degradation of stored materials due to air trapped within the container.

Another object of the present invention is to provide a safe, simple and cost-effective method to improve shelf-life of stored materials, such as foodstuff, medicines and other perishable substances, while maintaining their organoleptic properties and their content of volatile compounds.

To solve these problems, the present invention provides a multilayer assembly comprising at least:
a) one layer of paper or of a polymeric material selected from polypropylene, polyester, polyamide, polyethylene and their mixtures and copolymers;
b) at least one adhesive layer adjoining the layer a) to a metallic and/or polymeric layer,
wherein the adhesive layer b) comprises a mixture of at least a catechin and a polymeric adhesive composition.

To solve the problems described above, the present invention also provides a container comprising a plurality of walls defining a inner space, wherein the multilayer assembly as described above forms at least partially at least one of said walls, the layer of polymeric material a) facing towards the inner space of the container.

Another aspect of the invention pertains to a process for the production of the multilayer assembly as described above, said method comprising the steps of laminating the layer a) of polymeric material and at least another layer, wherein a) is made to adhere to the other layer by means of the adhesive b).

In another aspect, the present invention comprises the use of the multilayer assembly as described above for packaging of oxidation-sensitive goods.

### BRIEF DESCRIPTION OF THE DRAWINGS

Fig. 1 is a graph depicting viscosity (mPas) vs. time (hours) of a NCO-terminated polyurethane adhesive comprising, as an additive, 0% (standard), 0.7% w/w (test A), 1.5% w/w (test B), 3.0% w/w (test C) or 6.0% w/w (Test D) of antioxidant green tea extract as measured according to the Viscosity Brookfield method (ASTM-D2196-10).
Fig. 2 is a graph depicting NCO content (% on wet adhesive according to the %NCO evaluation of ASTM-D2572-97) vs. time (hours) of a NCO-terminated polyurethane adhesive comprising, as an additive, 0% (standard), 0.7% w/w (test A), 1.5% w/w (test B), 3.0% w/w (test C) or 6.0% w/w (Test D) of antioxidant green tea extract.
Fig. 3 is a graph depicting the bond strength of Aluminium-Polyethylene (N/15 mm)-speed 50 mm/min vs. time (hours) according to ASTM-F904-98 of a NCO-terminated polyurethane adhesive comprising, as an additive, 0% (standard), 0.7% w/w (test A), 1.5% w/w (test B), 3.0% w/w (test C) or 6.0% w/w (Test D) of antioxidant green tea extract.
Fig. 4 is a graph depicting viscosity (mPas) vs. time (hours) of an OH-terminated polyurethane adhesive comprising, as an additive, 0% (standard), 3.0% w/w (test E) or 6.0% w/w (Test F) of antioxidant green tea extract as measured according to the Viscosity Brookfield method (ASTM- D2196-10).
Fig. 5 is a graph depicting NCO content (% on wet adhesive according to the %NCO evaluation of ASTM-D2572-97) vs. time (hours) of an OH-terminated polyurethane adhesive comprising, as an additive, 0% (standard), 3.0% w/w (test E) or 6.0% w/w (Test F) of antioxidant green tea extract.
Fig. 6 is a graph depicting the bond strength of Aluminium-Polyethylene (N/15 mm)-speed 50 mm/min vs. time (hours) according to ASTM-F904-98 of a OH-terminated polyurethane adhesive comprising, as an additive, 0% (standard), 3.0% w/w (test E) or 6.0% w/w (Test F) of antioxidant green tea extract.
Fig. 7 is a schematic representation of the multilayer of the invention, showing the catechin-comprising layer b) adjoining layer a) (facing towards oxygen-sensitive materials) and another layer.

### DETAILED DESCRIPTION OF THE INVENTION

As used in the present invention, the term "comprises" may refer to a substance, which can be present in a mixture in any percentage, i.e. up to and including 100%. As used herein, unless otherwise specified, all percentages of a component in a mixture are referred to weight of the component with respect to the total weight of the mixture (w/w).

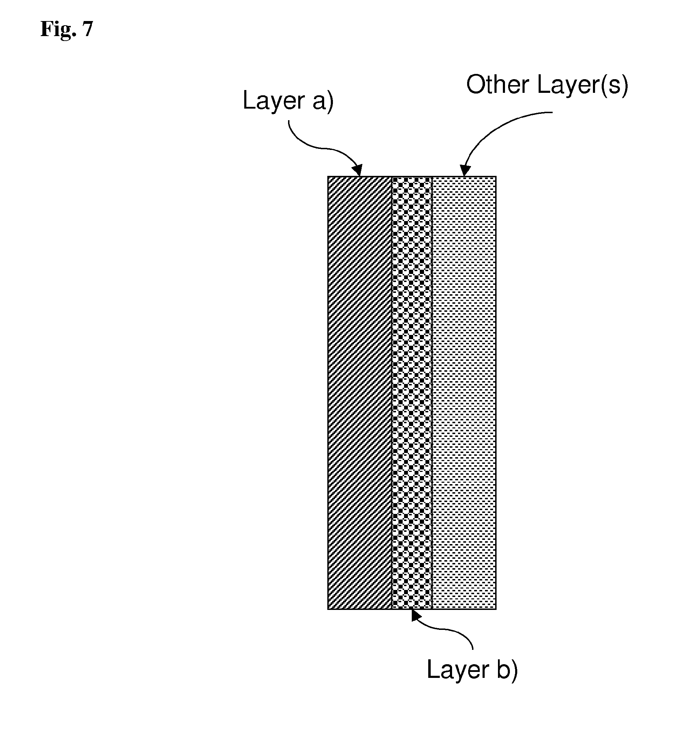

"Multilayer assembly" as used herein means a material comprising a plurality of layers (e.g. sheets or films), made of the same or of different materials, adjoined on their largest surface portions (Fig. 7).

In one embodiment, the present invention relates to a multilayer assembly comprising at least:
a) one layer of paper or of a polymeric material selected from polypropylene, polyester, polyamide, polyethylene and their mixtures and copolymers;
b) at least one adhesive layer adjoining the layer a) to a metallic and/or polymeric layer,
wherein the adhesive layer b) comprises a mixture of at least a catechin and a polymeric adhesive composition.

As used in relation to the present invention, "catechin" relates to any member of the catechins family, including isomers and stereoisomers, hydroxylated derivatives, including gallocatechins, salts, naturally occurring glycosides, esters, including gallates, conjugates, including cyclodextrin complexes, and mixtures thereof. Catechins are naturally occurring phenols belonging to the group of flavan-3-ols (also referred to as flavanols), which are part of the flavonoids family.

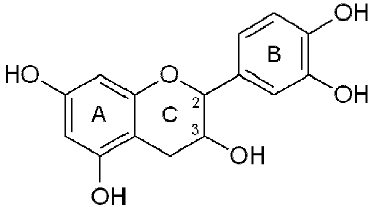

Catechins (general formula C₁₅H₁₄O₆) possess two benzene rings (called the A- and B- ring) and a dihydropyran heterocycle (the C-ring) with a hydroxyl group on carbon 3. The A ring is similar to a resorcinol moiety while the B ring is similar to a catechol moiety. There are two chiral centers on the molecule on carbons 2 and 3. Therefore, catechin has four diastereoisomers. The two isomers in trans configuration are called catechin and the other two in cis configuration are called epicatechin.

The most common catechin isomer is the (+)-catechin. The other stereoisomer is (-)-catechin or ent-catechin. The most common epicatechin isomer is (-)-epicatechin (also known under the names L-epicatechin, epicatechol, (-)-epicatechol, 1-acacatechin, 1-epicatechol, epi-catechin, 2,3-cis-epicatechin or (2R,3R)-(-)-epicatechin).

Common derivatives and conjugates are (-)-Gallocatechin (GC), (-)-Epigallocatechin (EGC), (-)-Epigallocatechin gallate (EGCG), (-)-Gallocatechin gallate (GCG), (-)-Epicatechin gallate (ECG) and (-)-Catechin gallate (CG). Catechins, particularly (+)-catechin and (-)-epicatechin, are found in land plants such as açaí palm (Euterpe *oleracea),* peach *(Prunus persica),* argan *(Argania spinosa* L.), cocoa and *Camellia sinensis* (tea).

Tea extracts are a particularly convenient source of naturally occurring catechins.

It was surprisingly found that the presence of an antioxidant substance, such as a catechin, effectively reduces the degradation caused by residual air of the materials inside the container, even if catechin is only comprised in an inner layer of the package. In other words, it was found that incorporation of catechins in a layer, which is not in direct contact with the inner portion of the container, surprisingly reduces or eliminates the oxidative degradation of the content of the package. Thus, in the assembly of the invention, the inner layer may consist of a material commonly used in foodstuff or drug packaging, such as polypropylene, polyester, polyamide, polyethylene and their mixtures and copolymers.

The multilayer assembly according to the invention can be flexible, semi-flexible or rigid. Preferably, the multilayer assembly according to the invention is flexible.

For the purpose of example only, and not by way of limitation, the multilayer assembly according to the invention may comprise HDPE, LLDPE, MDPE, LDPE, copolymer polypropylene with polybutene, EVA, coextruded polymeric materials with nylon, EVOH, etc. Preferably, in the multilayer assembly according to the present invention, the polymeric material of layer a) comprises polyethylene.

Preferably, in the multilayer assembly according to the present invention, layer a) has a thickness of 20 to 400 micron, more preferably from 30 to 100 micron. Even more preferably, said layer a) has a thickness from 35 to 85 micron, or of 50 micron.

It was surprisingly found that catechins are practically not released from the inner (adhesive) layer of the multilayer material of the invention, so that no contamination of the contents of the package with catechins was observed.

This is particularly advantageous, because the use of the multilayer assembly according to the present invention minimizes the risk of cross-contamination of sensitive goods. In addition, the use of well-known and widely accepted materials for the layer in direct contact with the package content reduces the need for additional compatibility and stability tests.

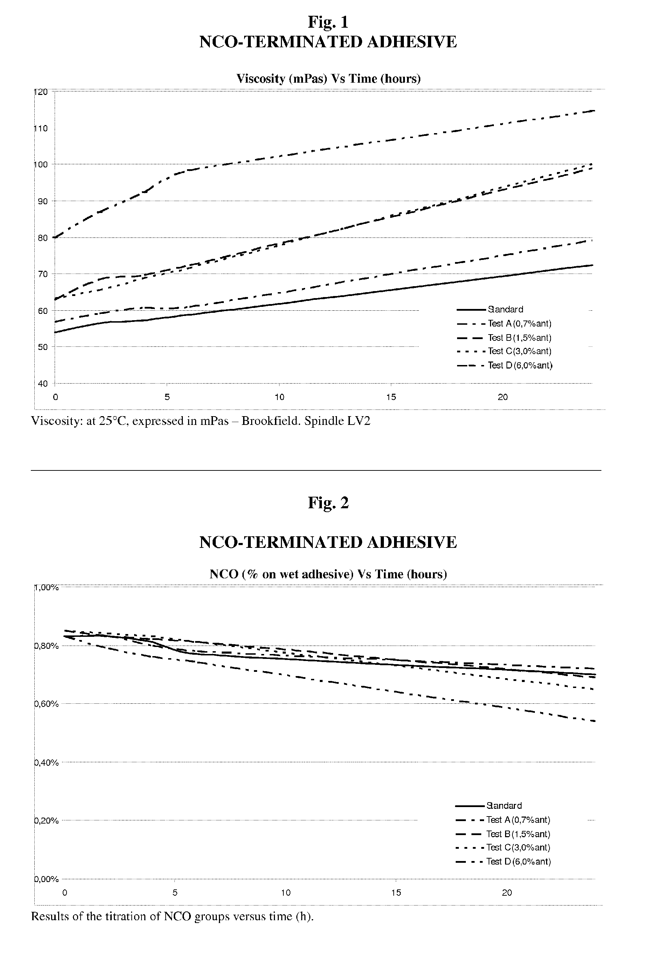

It was also found that the catechins in the multilayer assembly of the invention exert their antiradical/antioxidant properties without changing the chemical and mechanical properties of the adhesive. Therefore, the curing time and the final bond strength of the catechins-containing adhesive are not changed, which eventually results in overall maintenance of the usual adhesive performance (Figures 1-6) without delamination of the multilayer product.

Several sources of catechins can be used for the preparation of the adhesive composition of layer b) according to the invention. Non-limitative examples of said sources are purified catechins, mixtures of naturally-occurring or synthetic catechins, plant extracts, such as green tea and black tea extracts, standardized or raw, and mixtures thereof.

The polymeric adhesive layer b) of the multilayer composition according to the invention can comprise a polyurethane adhesive, a mono-, bi- or multiple component adhesive, an adhesive comprising blocked isocyanates (i.e. capped isocyanate groups which can be uncapped at high cure temperatures) or a pressure sensitive adhesive (PSA). Non-limiting examples of PSA adhesives are acrylics, bio-based acrylate, Butyl rubber, ethylenevinyl acetate (EVA) with high vinyl acetate content, natural rubber, nitriles, silicone rubbers, requiring special tackifiers based on "MQ" silicate resins, composed of a monofunctional trimethyl silane ("M") reacted with quadrifunctional silicon tetrachloride ("Q"), styrene block copolymers (SBC), also called styrene copolymer adhesives and rubber-based adhesives, styrene-butadiene-styrene (SBS), styrene-ethylene/butylene-styrene (SEBS), Styrene-ethylene/propylene (SEP), styrene-isoprene-styrene (SIS), vinyl ethers or mixtures thereof.

Preferably, the polymeric adhesive layer b) of the multilayer composition according to the invention comprises a polyurethane composition.

For purposes of illustration, but not by way of limitation, the isocyanate component of the polyurethane adhesive composition may be aromatic, aliphatic or cycloaliphatic and may have an average functionality equal to or more than 2.

For purposes of illustration but not by way of limitation, said isocyanate may comprise at least one of toluene diisocyanate (TDI), methylene diphenyl diisocyanate (MDI), phenylene diisocyanate, xylylene diisocyanate, diphenylmethane diisocyanate, polyphenylmethane polyisocyanate (Polymeric MDI), naphthalene diisocyanate, triphenylmethane triisocyanate, diphenyl sulfone diisocyanate, cyclohexane diisocyanates, ethylene diisocyanate, propylene diisocyanate, tetramethylene diisocyanate, hexamethylene diisocyanate, isophorone diisocyanate (IPDI), dimers and trimers of these diisocyanates or mixtures thereof.

For purposes of illustration but not by way of limitation, in certain embodiments, the isocyanate may comprise at least one of toluene 2,4-diisocyanate, toluene 2,6-diisocyanate, naphthylene 1,5-diisocyanate, 4,4'-methylene diphenyl diisocyanate, 2,4'-methylene diphenyl diisocyanate, 1-methyl-2,4-diisocyanatocyclohexane, 1-methyl-2,6-diisocyanatocyclohexane, 4,4'-dicyclohexyl-methane diisocyanate, urethodione diisocyanate, isocyanurate trisocyanate, hexamethylene-1,6-diisocyanate, tetramethyl ene-1,4-diisocyanate, cyclohexane- 1,4- diisocyanate, hexahydrotolylene dii socyanate (and isomers), 1-methoxyphenyl-2,4- diisocyanate, diphenyl methane-4,4'-diisocyanate, 4,4'-biphenylene diisocyanate, 3, 3'-dimethoxy-4,4'-biphenyl diisocyanate, 3,3'-dimethyl-4,4'-biphenyldiisocyanate; 3,3'-dimethyl diphenylmethane-4,4'-diisocyanate, 1-isocyanatomethyl-3-isocyanato-1,5,5-trimethyl diisocyanate, dimers or trimers of these isocyanates, or mixtures thereof.

For purposes of illustration but not by way of limitation, in some embodiments the isocyanate may comprise at least one of 1-isocyanatomethyl-3-isocyanato-1,5,5-trimethyl diisocyanate (isophorone diisocyanate, IPDI), toluene diisocyanate (TDI), methylene diphenyl diisocyanate (MDI), or mixtures thereof.

The isocyanate or polyol component may comprise a prepolymer reaction product comprising the residues of a polyol, and a polymeric isocyanate or a polymeric isocyanate and an aromatic or aliphatic diisocyanate.

For the purpose of illustration only and not by way of limitation, the polyurethane adhesive may be a NCO-terminated polyurethane adhesive obtained via polymerization of a NCO-functionalized polyurethane prepolymer based on MDI (MW = 15 kDalton) and a polyester polyol obtained from isophthalic acid and trimethylolpropane (MW = 13 kDalton).

For the purpose of illustration only and not by way of limitation, the polyurethane adhesive may be an OH-terminated polyurethane adhesive obtained via polymerization of a polyester based on isophthalic acid and adipic acid (2:1 ratio) and DEG (diethylene glycol) urethanized with IPDI (MW = 25 kDalton) with a HDI-based cross-linker (MW around 500 Dalton).

In certain embodiments, the polyurethane adhesive composition additionally comprises a plasticizer.

The polyurethane adhesive for the purpose of the present invention may be solvent-free, solvent-based or water-based.

In certain embodiments, the polyurethane adhesive composition may additionally comprise at least one of any of a conventional, commercially available catalyst, inorganic filler, colorant, antioxidant, UV light absorber, adhesion promoter, calcium oxide, expandable microspheres including Expancel(R) products available from AkzoNobel, drying agents, or mixtures thereof. In certain embodiments, the polyurethane adhesive composition may additionally comprise at least one of any of conventional, commercially available organic fillers, chain extenders, UV stabilizers, light stabilizers, fungicides, mildewcides, biocides, fire retardants, surface additives, solvents, mineral oils, dispersing agents, defoaming agents, storage stabilizers, latent hardeners, cure retarders, antifoaming agents, solvents, or mixtures thereof.

The polyurethane adhesive compositions, comprising at least a catechin, in layer b) of the assembly of the invention can be prepared according to the standard method for preparation of urethane adhesives, commonly known to the person skilled in the art.

The catechin source may be added to one of the components of the polyurethane adhesive prior to the polymerization reaction or after mixing the two components of the adhesive composition.

Preferably, the catechin source is added to one of the components of the polyurethane adhesive prior to the polymerization reaction. Thus, a mixture of catechins and of the isocyanate and/or of the polyol component can be produced and stored and conveniently used according to the production needs. Preferably, the adhesive layer b) according to the invention comprises from 0.1 to 15.0% w/w of at least a catechin, preferably from 0.5 to 10%, from 1 to 7%, o from 2 to 6.5% and more preferably from 3 to 5%.

Preferably, in the multilayer assembly according to the invention the adhesive layer b) comprises green tea extract (comprising at least 50% w/w of catechins). It was found that an adhesive composition with antiradical/antioxidant properties is advantageously and easily prepared by addition of green tea extract to the isocyanate and/or to the polyol component of the polyurethane adhesive before or during polymerization.

A green tea extract can be used for the composition of the present invention, which comprises at least 50% w/w of catechins, preferably at least 70%, more preferably at least 75% w/w of catechins. Non-limiting examples of catechins comprised in the green tea extract in the composition of the present invention are (-)-Gallocatechin (GC), (-)-Epigallocatechin (EGC), (-)-Catechin (C), (-)-Epigallocatechin gallate (EGCG), (-)-Epicatechin (EC), (-)-Gallocatechin gallate (GCG), (-)-Epicatechin gallate (ECG) and (-)-Catechin gallate (CG) and mixtures thereof.

Preferably, the green tea extract in the adhesive layer b) of the assembly of the invention comprises at least 40% w/w Epigallocatechin gallate (EGCG).

In addition, said green tea extract may comprise caffeine and gallic acid.

Preferably, the content of the green tea extract in the adhesive layer of the material of the invention is between 0.5 and 7%, more preferably between 0.7 and 6%, even more preferably between 3 and 5%.

Preferably, in the multilayer assembly according to the invention, the polyurethane adhesive comprised in layer b) is selected from a solvent free, solvent-based or water-based polyurethane, wherein each type can be based on a polyol component selected from the group consisting of polyester polyol, polyether polyol, polyacrylate polyol and polycarbonate polyol, and a mixture thereof, and an isocyanate component selected from an aliphatic isocyanate, an alicyclic isocyanate or aromatic isocyanate.

Preferably, in the multilayer assembly according to the invention, the polyurethane adhesive may be a NCO-terminated polyurethane adhesive obtained via polymerization of a NCO-functionalized polyurethane pre-polymer based on MDI (MW = 15 kDalton) and a polyester polyol obtained from isophthalic acid and trimethylolpropane (MW = 13 kDalton), a OH-terminated polyurethane adhesive obtained via polymerization of a polyester obtained from isophthalic/terephtalic acid and ethylenglycol (MW around 60 kDalton) with a IPDI-based crosslinker (MW around 600 Dalton), a OH-terminated polyurethane adhesive obtained via polymerization of a polyester based on isophthalic acid and adipic acid (2:1 ratio) and DEG (diethylene glycol) urethanized with IPDI (MW = 25 kDalton) with a HDI-based cross-linker (MW around 500 Dalton) or a NCO-terminated polyurethane adhesive obtained via polymerization of a NCO-functionalized polyurethane pre-polymer based on isophtalic/oxalic acid and DEG, urethanized with MDI and a PPG as crosslinker.

The multilayer assembly of the present invention, in addition to the layer a) and to the adhesive layer b), may comprise additional sheets consisting of, or comprising, the following materials (in any sequence): aluminium, polyethylene, aluminized polyethylene, rubber, paper, metalized polyester, polyamide, cellophane, polyvinyl alcohol, polyester, polypropylene, polystyrene, PLA, biopolymers, gas-barrier PET (Alox, Siox), metalized cellophane, co-extruded polymeric materials comprising polyethylene, polypropylene and/or PVC and co-extruded barrier films.

In an aspect, the present invention relates to a container comprising a plurality of walls defining a inner space, wherein the multilayer assembly as described above forms at least partially at least one of said walls, the layer of polymeric material a) facing towards the inner space of the container.

The container according to the invention may be a flexible, semi-flexible or rigid container, optionally in the form of a pouch, a bag, a single dose pod, a can, a bottle or a four-seal pack, all of which optionally provided with an pressure degassing valve and/or with an opening and reclosing device and/or with a label.

Said degassing valve may comprise a valve body and a filter, engaging the valve body and positioned in front of the contained product. The filter comprises a catechin-comprising composition, optionally in the form of a green tea extract, a solid or semisolid matrix, a thin layer or a porous bag. In said degassing valve, the filter may comprise the multilayer assembly as described above, i.e. comprising layer a) and the adhesive polyurethane layer b). Optionally, the degassing valve comprises a mobile valve element of the one-way type that is positioned on the valve body, which may allow the passage of gas from the inside of the container towards the external environment when a predefined internal pressure threshold is reached.

The container according to the invention may be used for storage of a wide variety of goods including fresh, processed or semi-processed foodstuff, in particular ground coffee, dried or fresh coffee beans or pods, tea or tea leaves, fruit juice, chocolate, tomato juice or sauces, rice, cereals, ready meals, fresh dough, yeast, pharmaceutical and nutraceutical products, cosmetics and air-sensitive products in general.

Preferably, the container according to the present invention is suitable for packaging of foodstuff, cosmetics and/or pharmaceutical/nutraceutical products.

In another aspect, the present invention relates to a process for the production of the multilayer assembly as described above, comprising the steps of laminating the layer a) of polymeric material and at least another layer, wherein a) is made to adhere to the other layer by means of the adhesive b).

Advantageously, the catechin-containing polyurethane adhesive of layer b) can be used in the lamination process similarly to the commercially available polyurethane adhesives, i.e. employing procedures and machinery known to the person skilled in the art. Thus, the process of the invention can be implemented on the commonly available plants with no need for modification of the packaging lines or any experimentation in addition to the basic routine activity.

In another aspect, the present invention relates to a use of the multilayer assembly as described above for packaging of oxidation-sensitive goods.

Preferably, said oxidation-sensitive goods are foodstuff, cosmetics and/or pharmaceutical/nutraceutical products. More preferably, said oxidation-sensitive goods are ground coffee, dried or fresh coffee beans or pods, tea or tea leaves, fruit juice, chocolate, tomato juice or sauces, rice, cereals, ready meals, fresh dough, yeast.

Hereinafter, the present invention is described in more detail and specifically with reference to the Examples, which, however, are not intended to limit the present invention.

### EXAMPLES

In all examples, a green tea extract is added to polyurethane as a source of catechins.

The Green Tea extract is obtained from a commercial source.

The specific content of catechins is > 75% w/w, in particular Epigallocatechin gallate (EGCG) > 40% w/w. The content of caffeine is < 10% w/w.

From a chromatographic analysis, the following catechins are identified: (-)-Gallocatechin (GC), (-)-Epigallocatechin (EGC), (-)-Catechin (C), (-)-Epigallocatechin gallate (EGCG), (-)-Epicatechin (EC), (-)-Gallocatechin gallate (GCG), (-)-Epicatechin gallate (ECG) and (-)-Catechin gallate (CG).

The NCO-terminated polyurethane adhesive is obtained via polymerization of a NCO-functionalized polyurethane pre-polymer based on MDI (MW = 15 kDalton) and a polyester polyol obtained from isophthalic acid and trimethylolpropane (MW = 13 kDalton) or via polymerization of a NCO-functionalized polyurethane pre-polymer based on isophtalic/oxalic acid and DEG, urethanized with MDI and a PPG as crosslinker.

The OH-terminated polyurethane adhesive is obtained via polymerization of a polyester based on isophthalic acid and adipic acid (2:1 ratio) and DEG (diethylene glycol) urethanized with IPDI (MW = 25 kDalton) with a HDI-based cross-linker (MW around 500 Dalton) or via polymerization of a polyester obtained from isophthalic/terephtalic acid and ethylenglycol (MW around 60 kDalton) with a IPDI-based crosslinker (MW around 600 Dalton).

### Example 1: properties of the adhesive of the invention.

The chemical and mechanical properties of the adhesives should not be changed substantially by the presence of the catechin additive. This means that the curing time and the final bond strength of the catechin-containing adhesive should not be changed so as to reduce its usual performance.

For these reasons, the curing time of the adhesive in ethyl acetate solution (40% dry content) and the bond strength obtained applying 3 g/m² of dry adhesive between aluminum foil and polyethylene are investigated. As a comparison, the same adhesive, but without the catechin additive, is also evaluated.

The curing time of the dry adhesive is analysed via IR spectroscopy, evaluating the signal at 2265 nm, typical of the NCO peak. The aim is to verify that the catechin additive does not change the curing time of the adhesive, prolonging the time necessary for the delivery of the laminated to the customer. For a converter, i.e. a manufacturer of packaging materials, it is important to send the material to its customer only when the adhesive is completely cured.

The curing time of the adhesive in ethyl acetate solution is evaluated through acid-base titration of the NCO percentage and through viscosity analyses with Brookfield viscometer. The aim is to verify that curing of the adhesive does not occur too rapidly. Normally, the time between the preparation of the adhesive and its use in a rotogravure process is between 1 hour and 6 hours. The analysis results hereafter highlight the suitability of the material of the invention for these processes. Finally, the adhesion between aluminum foil and polyethylene is evaluated after 14 days from the lamination. This is one of the validation processes to understand if the product is in compliance with the standard reference.

The following adhesives are evaluated:
- Standard polyurethane adhesive NCO terminated (no added catechin)
- Standard polyurethane adhesive NCO terminated with 0.7% of green tea extract on dry content (TEST A)
- Standard polyurethane adhesive NCO terminated with 1.5% of green tea extract on dry content (TEST B)
- Standard polyurethane adhesive NCO terminated with 3.0% of green tea extract on dry content (TEST C)
- Standard polyurethane adhesive NCO terminated with 6.0% of green tea extract on dry content (TEST D)
- Standard polyurethane adhesive OH terminated (no added catechin)
- Standard polyurethane adhesive OH terminated with 3.0% of catechins on dry content (TEST E)
- Standard polyurethane adhesive OH terminated with 6.0% of catechins on dry content (TEST F)

The parameters are evaluated according to the following reference methods:
Viscosity Brookfield: ASTM-D2196-10
Adhesion evaluation: ASTM-F904-98
%NCO evaluation: ASTM-D2572-97

Fig. 1 is a graph depicting viscosity (mPas) vs. time (hours) of a NCO-terminated polyurethane adhesive comprising, as an additive, 0% (standard), 0.7% w/w (test A), 1.5% w/w (test B), 3.0% w/w (test C) or 6.0% w/w (Test D) of antioxidant green tea extract as measured according to the Viscosity Brookfield method (ASTM-D2196-10).

Fig. 2 is a graph depicting NCO content (% on wet adhesive according to the %NCO evaluation of ASTM-D2572-97) vs. time (hours) of a NCO-terminated polyurethane adhesive comprising, as an additive, 0% (standard), 0.7% w/w (test A), 1.5% w/w (test B), 3.0% w/w (test C) or 6.0% w/w (Test D) of antioxidant green tea extract

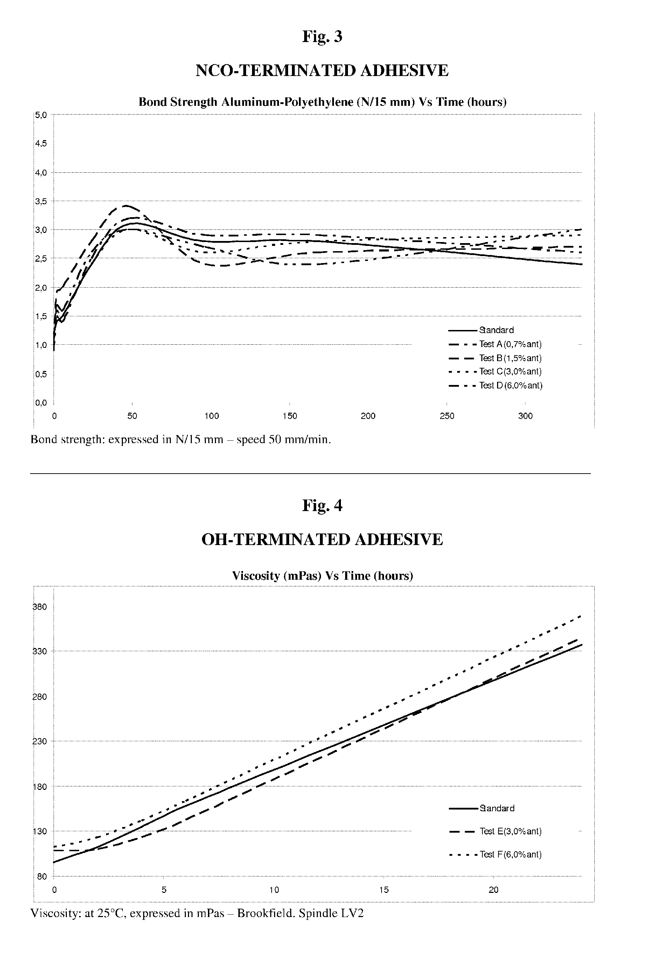

Fig. 3 is a graph depicting the bond strength of Aluminium-Polyethylene (N/15 mm)-speed 50 mm/min vs. time (hours) according to ASTM-F904-98 of a NCO-terminated polyurethane adhesive comprising, as an additive, 0% (standard), 0.7% w/w (test A), 1.5% w/w (test B), 3.0% w/w (test C) or 6.0% w/w (Test D) of antioxidant green tea extract

Fig. 4 is a graph depicting viscosity (mPas) vs. time (hours) of an OH-terminated polyurethane adhesive comprising, as an additive, 0% (standard), 3.0% w/w (test E) or 6.0% w/w (Test F) of antioxidant green tea extract as measured according to the Viscosity Brookfield method (ASTM- D2196-10).

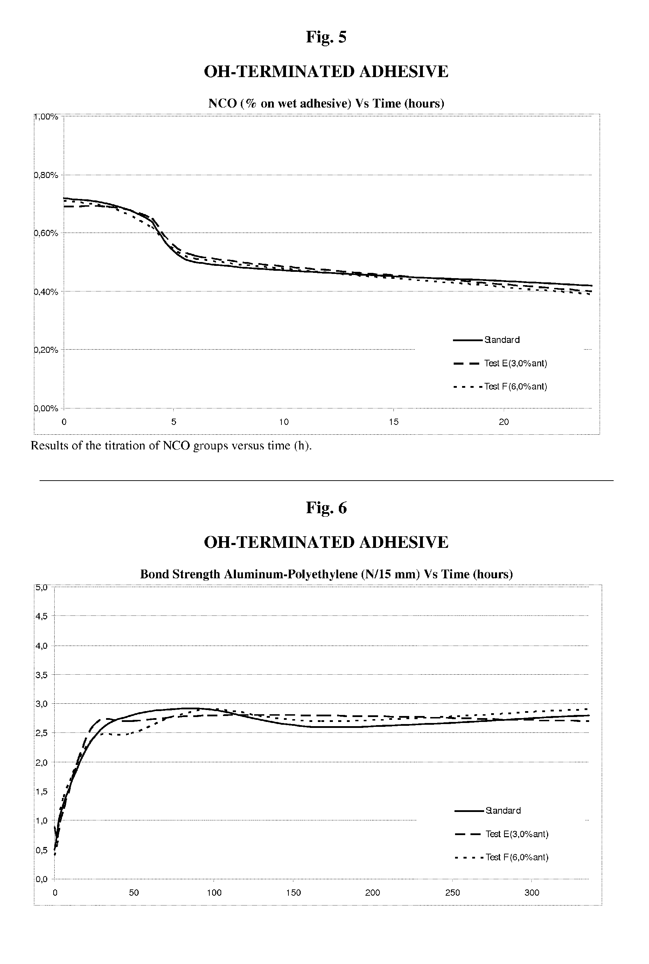

Fig. 5 is a graph depicting the NCO content (% on wet adhesive according to the %NCO evaluation of ASTM-D2572-97) vs. time (hours) of an OH-terminated polyurethane adhesive comprising, as an additive, 0% (standard), 3.0% w/w (test E) or 6.0% w/w (Test F) of antioxidant green tea extract.

Fig. 6 is a graph depicting the bond strength of Aluminium-Polyethylene (N/15 mm)-speed 50 mm/min vs. time (hours) according to ASTM-F904-98 of a OH-terminated polyurethane adhesive comprising, as an additive, 0% (standard), 3.0% w/w (test E) or 6.0% w/w (Test F) of antioxidant green tea extract.

The graphs show no considerable differences due to the addition of the catechin-containing powder. In fact, the increase of the viscosity in the time is the same for all adhesives. Of course, the higher the amount of catechins the higher the viscosity at time 0, but this aspect does not represent a problem during the industrial process. The important feature is that the viscosity of the adhesive must not increase exceedingly in the first 6 hours after its preparation, so that the percentage of NCO must not decrease steeply in the same period.

Also the adhesion values are very similar if the standard adhesive is compared to all the catechin-containing adhesives.

Thus, the addition of catechins to the polyurethane adhesive does not change the physical and chemical properties of the latter.

### EXAMPLE 2

### ANTIOXIDANT BEHAVIOUR

The new adhesives containing green tea as antiradical/antioxidant agent are used to prepare several laminates and the antioxidant performance is evaluated. Two different procedures are used to evaluate the antiradical/ antioxidant performance:
1. Dynamic mode, based on the procedure previously developed by Pezo, D; Salafranca, J; Nerin, C. "Determination of the antioxidant capacity of active food packagings by in situ gas-phase hydroxyl radical generation and high performance liquid chromatography-fluorescence detection", J. of Chromatography A 178, Issues 1-2, 18, 126-133, 2008.
2. Static method, based on the DPPH reaction (Blois, M. S. "Antioxidant determinations by the use of a stable free radical Nature", 1958, 181, 1199-1200), this method is the most widely used in the literature. It is based on the capacity of the 2,2-diphenyl-1-picrylhydrazyl radical (DPPH) to react (through an acceptance of an electron) and to transform into a stable molecule. In the radical form DPPH absorbs at 515 nm, but, upon reduction by an antioxidant or a radical species, said absorption does not occur.

Samples (3 and 5 replicates) are prepared in glass vials. Each plastic sample is placed inside a 20 ml glass vial, with 5 ml of a solution of DPPH in methanol and the vial is sealed. Absorbance (515 nm) is measured each hour with a spectrophotometer Unicam Helios (Cambridge, UK), using quartz cuvettes 100-QS (1 cm x 1 cm x 4.5 cm) from Suprasil (Spain).

The quantitative value of absorbance is measured in the spectrophotometer.

A calibration graph is built before for quantitative purposes.

In both dynamic mode and static method, the material containing the catechins in the adhesive shows very good performance as antioxidant. Tables 1, 2 and 3 show the results obtained, expressed as percentage of antioxidant capacity varying the test temperature and the thickness of the PE layer a) (expressed in micron).

Table 1.- ADHESIVE 1, 4, 5. Standard polyurethane adhesive NCO terminated.
Adh 1: blank (adhesive without green tea extract).
Adh 4: adhesive containing 3% green tea extract.
Adh 5: adhesive containing 6% green tea extract.
1. 20°C - 35µm

| **Adhesive** | **% Antioxidant capacity** | **%RSD (n=3)** |
|---|---|---|
| Adh 1 | 0 | 1 |
| Adh 4 | 17 | 1 |
| Adh 5 | 29 | 4 |

2. 20°C - 85µm

| **Adhesive** | **% Antioxidant capacity** | **%RSD (n=3)** |
|---|---|---|
| Adh 1 | 0 | 1 |
| Adh 4 | 28 | 3 |
| Adh 5 | 30 | 4 |

3. 40°C - 35µm

| **Adhesive** | **% Antioxidant capacity** | **%RSD (n=3)** |
|---|---|---|
| Adh 1 | 0 | 2 |
| Adh 4 | 17 | 3 |
| Adh 5 | 30 | 2 |

4. 40°C - 85µm

| **Adhesive** | **% Antioxidant capacity** | **%RSD (n=3)** |
|---|---|---|
| Adh 1 | 0 | 6 |
| Adh 4 | 16 | 2 |
| Adh 5 | 34 | 7 |

Table 2. ADHESIVE 8, 9, 10.

Standard polyurethane adhesive OH terminated.
Adh 8: blank (adhesive without green tea extract).
Adh 9: adhesive containing 3% green tea extract.
Adh 10: adhesive containing 6% green tea extract.
1. 20°C - 35µm

| **Adhesive** | **% Antioxidant capacity** | **%RSD (n=3)** |
|---|---|---|
| Adh 8 | 0 | 5 |
| Adh 9 | 33 | 2 |
| Adh 10 | 43 | 2 |

2. 20 °C - 85µm

| **Adhesive** | **% Antioxidant capacity** | **%RSD (n=3)** |
|---|---|---|
| Adh 8 | 0 | 4 |
| Adh 9 | 35 | 2 |
| Adh 10 | 45 | 3 |

3. 40 °C - 35µm

| **Adhesive** | **% Antioxidant capacity** | **%RSD (n=3)** |
|---|---|---|
| Adh 8 | 0 | 6 |
| Adh 9 | 33 | 6 |
| Adh 10 | 53 | 8 |

4. 40 °C - 85µm

| **Adhesive** | **% Antioxidant capacity** | **%RSD (n=3)** |
|---|---|---|
| Adh 8 | 0 | 2 |
| Adh 9 | 34 | 3 |
| Adh 10 | 42 | 4 |

Table 3. ADHESIVE 11, 12, 13. Monocomponent polyurethane-based adhesive.
Adh 11: blank (adhesive without green tea extract).
Adh 12:adhesive containing 3% green tea extract according to the invention.
Adh 13: adhesive containing 6% green tea extract according to the invention.
1. 20 °C - 35µm

| **Adhesive** | **% Antioxidant capacity** | **%RSD (n=3)** |
|---|---|---|
| Adh 11 | 0 | 1 |
| Adh1 2 | 17 | 1 |
| Adh 13 | 29 | 4 |

2. 20 °C - 85µm

| **Adhesive** | **% Antioxidant capacity** | **%RSD (n=3)** |
|---|---|---|
| Adh 11 | 0 | 1 |
| Adh 12 | 28 | 3 |
| Adh 13 | 30 | 4 |

3. 40 °C - 35µm

| **Adhesive** | **% Antioxidant capacity** | **%RSD (n=3)** |
|---|---|---|
| Adh 11 | 0 | 2 |
| Adh 12 | 17 | 3 |
| Adh 13 | 30 | 2 |

4. 40 °C - 85µm

| **Adhesive** | **% Antioxidant capacity** | **%RSD (n=3)** |
|---|---|---|
| Adh 11 | 0 | 6 |
| Adh 12 | 16 | 2 |
| Adh 13 | 34 | 7 |

As can be seen from the tables, the PU adhesives containing 6% of green tea has a high antioxidant capacity.
5. 20 °C - PE 35µm

| **Adhesive** | **% Antioxidant capacity** | **%RSD (n=3)** |
|---|---|---|
| Adh A (adhesive without catechin) | 0 | 2 |
| Adh B (adhesive with catechin) | 46 | 2 |

6. 20 °C - PE 75µm

| **Adhesive** | **% Antioxidant capacity** | **%RSD (n=3)** |
|---|---|---|
| Adh C (adhesive without catechin) | 0 | 1 |
| Adh D (adhesive with catechin) | 43 | 1 |

Adh A and Adh C are blanks. Adh B and Adh D are adhesives containing green tea extract according to the invention. All samples are analyzed in triplicate.

Both samples demonstrate good antioxidant behaviour.

## Claims

1. A multilayer assembly comprising at least:
a) one layer of paper or of a polymeric material selected from polypropylene, polyester, polyamide, polyethylene and their mixtures and copolymers;
b) at least one adhesive layer adjoining the layer a) to a metallic and/or polymeric layer,
wherein the adhesive layer b) comprises a mixture of at least a catechin and a polymeric adhesive composition.

2. The multilayer assembly according to claim 1 wherein adhesive layer b) comprises green tea extract.

3. The multilayer assembly according to any of the preceding claims, wherein the polymeric adhesive composition of layer b) comprises a polyurethane adhesive composition.

4. The multilayer assembly according to any of the preceding claims, wherein the polymeric material of layer a) comprises polyethylene.

5. The multilayer assembly according to any of the preceding claims, wherein the layer a) has a thickness of 20 to 400 micron.

6. The multilayer assembly according to any of claims 3-5, wherein the polyurethane adhesive comprised in layer b) is selected from a solvent-free, solvent-based or water-based polyurethane, wherein each type can be based on a polyol component selected from the group consisting of polyester polyol, polyether polyol, polyacrylate polyol and polycarbonate polyol, and a mixture thereof, and an isocyanate component selected from an aliphatic isocyanate, an alicyclic isocyanate or aromatic isocyanate.

7. The multilayer assembly according to any of the preceding claims wherein the adhesive layer b) comprises from 0.1 to 15.0% weight/total weight of layer b) of at least one catechin.

8. A container comprising a plurality of walls defining a inner space, wherein the multilayer assembly according to any of the preceding claims forms at least partially at least one of said walls, the layer of polymeric material a) facing towards the inner space of the container.

9. The container according to claim 8 that is suitable for packaging of foodstuff, cosmetics and/or pharmaceutical products.

10. A process for the production of the multilayer assembly according to any of claims 1-7, comprising the steps of laminating the layer a) of polymeric material and at least another layer, wherein a) is made to adhere to the other layer by means of the adhesive b).

11. Use of the multilayer assembly according to any of claims 1-7 for packaging of oxidation-sensitive goods.

12. The use of claim 11 wherein said oxidation-sensitive goods are foodstuff, cosmetics and/or pharmaceutical/nutraceutical products.

13. The use of claim 12 wherein said oxidation-sensitive goods are ground coffee, dried or fresh coffee beans or pods, tea or tea leaves, fruit juice, chocolate, tomato juice or sauces, rice, cereals, ready meals, fresh dough or yeast.
